(19) Europäisches Patentamt
European Patent Office
Office européen des brevets

(11) EP 3 280 768 B1

# (12) EUROPEAN PATENT SPECIFICATION

(45) Date of publication and mention of the grant of the patent:
**19.12.2018 Bulletin 2018/51**

(21) Application number: **16715496.2**

(22) Date of filing: **06.04.2016**

(51) Int Cl.:
***C08L 23/14*** *(2006.01)* ***C08F 2/00*** *(2006.01)*
***C08F 10/06*** *(2006.01)*

(86) International application number:
**PCT/EP2016/057480**

(87) International publication number:
**WO 2016/162359 (13.10.2016 Gazette 2016/41)**

## (54) COMPOSITION BASED ON PP RANDOM COPOLYMERS AND ELASTOMERS

ZUSAMMENSETZUNG AUF BASIS VON PP-ZUFALLSCOPOLYMEREN UND ELASTOMEREN

COMPOSITION À BASE DE COPOLYMÈRES ET ÉLASTOMÈRES ALÉATOIRES À BASE DE PP

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.04.2015 EP 15163094**

(43) Date of publication of application:
**14.02.2018 Bulletin 2018/07**

(73) Proprietor: **Borealis AG**
**1220 Vienna (AT)**

(72) Inventors:
- **WANG, Jingbo**
**4209 Engerwitzdorf (AT)**
- **DOSHEV, Petar**
**4040 Linz (AT)**
- **SANDHOLZER, Martina**
**4030 Linz (AT)**
- **GAHLEITNER, Markus**
**4501 Neuhofen/Krems (AT)**

(74) Representative: **Maiwald Patent- und Rechtsanwaltsgesellschaft mbH**
**Elisenhof**
**Elisenstraße 3**
**80335 München (DE)**

(56) References cited:
**EP-A1- 1 889 873** **WO-A1-2008/020925**
**WO-A1-2010/015539** **WO-A1-2010/074815**
**WO-A1-2011/041696**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 280 768 B1

## Description

The present invention relates to a new polymer composition having good mechanical properties and high transparency, to articles comprising the polymer composition and to the use of the polymer composition for production of the articles.

There is an increasing trend in the food and medical packaging industry to use plastic containers. Polyolefin materials are very often used in this field.

High transparency is one of the most frequently required properties of polymer applications, especially in the packaging area. The optical appeal of a packaging system to the customer depends strongly on this factor, and it is at the same time decisive for visual recognition of the packaged product. Together, these factors make transparency a primary marketing instrument.

Additionally, good mechanical properties like impact strength as well as softness and flexibility are required for packaging applications, especially for medical packaging applications. Further, the sealability, in terms of wide sealing temperature range and high seal strength is also usually desired. However, in general it is very difficult to obtain materials with a good combination of mechanical properties, sealability and transparency.

Propylene random copolymers like propylene-ethylene random copolymers are quite often used for these applications, due to their good optical properties, especially high transparency. But the toughness of these polymers at temperatures at or below 0 °C is often not sufficient. Additionally, the practically applicable temperature range for sealing and welding is not sufficiently wide.

Modifications which are capable of correcting these problems while maintaining transparency have consequently been tackled from various directions in the past. It is known that impact strength of polypropylene can be improved by dispersing a rubber phase within the polymer matrix, thereby obtaining a heterophasic polypropylene composition. In general, heterophasic propylene copolymers have a better impact strength over a wide temperature range, but usually have low transparency.

EP0765654 A1 describes pouches comprising at least one layer based on a composition of isotactic polypropylene and an elastomeric styrene block copolymer. However this invention does not deal with the question as to how the sealing performance can be kept on high levels without losing other good properties needed in this field such as toughness and low haze.

WO2010015539 A1 discloses a heterophasic propylene copolymer based on a polypropylene matrix and a styrenic based elastomer. The heterophasic polypropylene composition provides high seal strength especially after sterilisation while maintaining the toughness. However the transparency of the materials is still not sufficiently satisfactory.

EP1352016 relates to a polypropylene terpolymer modified with a special ULDPE grade, however, also this polypropylene modified by ULDPE shows bad transparency while maintaining good impact strength and weldability.

EP1889873 relates to a polypropylene copolymer modified with an ethylene-propylene rubber. This invention shows a material with improved transparency while maintaining good mechanical properties, but without concern of the weldability and sealing temperature of the material.

In general, it is not possible for the present heterophasic propylene copolymer compositions to simultaneously achieve all the properties, namely high flexibility, high impact strength, high transparency and wide seal temperature range.

Therefore, the object of the present invention is to provide a polymer composition based on polypropylene, which shows an excellent balance of flexibility, toughness and transparency, and further has a low sealing initiation temperature, and a wide sealability temperature range.

The present invention is based on the finding that the above object can be achieved by compositions comprising specific polypropylene copolymer matrices and specifically selected elastomeric modifiers which have similar refractive properties with the polypropylene matrix.

Accordingly, the present invention is directed to a polymer composition comprising:

a) 65-90 wt% of a propylene copolymer (A) having

(1) a melt flow rate $MFR_2$ (230 °C) measured according to ISO1133 in the range of more than 0.8 to 15.0/10min,
(2) a comonomer content in the range of 2.0 to below 12.0 mol%,
(3) a melting temperature in the range of 125 to below 143 °C, and
(4) a xylene cold soluble fraction (XCS) in the range of 17.0 to 45.0 wt%,
(5) a glass transition temperature (Tg) in the range of from higher than -10 °C to 2°C,

and

b) 10-35 wt% of an elastomeric modifier (B) selected from ethylene-propylene elastomer (B-1), ethylene-alpha olefin elastomer (B-2) and styrenic elastomer (B-3), wherein the elastomeric modifier (B) is characterized in that,

(i) the difference between the refractive index (RI) of the propylene copolymer (A) and the refractive index (RI) of the elastomeric modifier (B) is less than 0.015, and

(ii) the glass transition temperature ($T_g$) of the elastomeric modifier (B) is equal to or below -20 °C.

Surprisingly the polymer composition according to the invention has exceptionally high impact strength and good optical properties, along with good softness and low sealing initial temperature (SIT).

It is essential that the polymer composition of the present invention comprises a propylene copolymer (A) as matrix and an elastomeric modifier (B) dispersed in the matrix of propylene copolymer (A), in order to obtain a good balance between mechanical properties and transparency in the composition. The weight percentage of propylene copolymer (A) in the composition is between 65 to 90 wt%, preferably between 70 to 85 wt%, more preferably between 70 to 80 wt%. The elastomeric modifier (B) is used in an amount between 10 to 35 wt%, preferably between 15 to 30 wt%, more preferably between 20 to 30 wt%.

The propylene copolymer (A) comprises apart from propylene also comonomers. It is appreciated that the propylene copolymer (A) preferably has comonomer content in a very specific range which contributes to the impact strength and the good optical properties. Thus it is required that the comonomer content of the propylene copolymer (A) is in the range of 2.0 to below 12.0, preferably in the range of 2.2 to below 10.8 mol.-%, more preferably in the range of 2.5 to below 10.0 mol.-%, still more preferably in the range of 3.5 to 9.5 mol.-%, yet more preferably in the range of 4.0 to below 9.2 mol.-%, still yet more preferably in the range of equal or more than 4.5 to 9.0 mol.-%.

The propylene copolymer (A) according to this invention has a melt flow rate $MFR_2$ (230 °C) measured according to ISO 1133 in the range of more than 0.8 to 15.0 g/10min, preferably in the range of more than 2.5 to 15.0 g/10min, more preferably in the range of 3.0 to 12.0 g/10min, still more preferably in the range of 5.0 to 10.0 g/10min.

Further the propylene copolymer (A) has a melting temperature of at least 125 °C, more preferably in the range of 125 to below 143 °C, still more preferably in the range of 128 to 142 °C, like in the range of 129 to 140 °C.

The xylene soluble content can be in a rather broad range. Accordingly the propylene copolymer (A) has a xylene cold soluble fraction (XCS) in the range of 17.0 to 45.0 wt%, preferably in the range of 17.0 to 40.0 wt%, more preferably in the range of equal or more than 18.0 to 39.0 wt-%.

Further it is preferred that the propylene copolymer (A) has a hexane soluble content of below 8.0 wt%, more preferably in the range of above 2.0 to below 8.0 wt%, still more preferably in the range of 2.5 to 6.0 wt%.

In addition, an essential feature of propylene copolymer (A) in the present invention is that it has a glass transition temperature in the range of from higher than -10 to +2 °C, more preferably in the range of from higher than -9 to +2 °C.

In order to achieve an excellent balance of impact strength and transparency for the polymer composition, it is essential that the difference between the refractive index (RI) of the propylene copolymer (A) and the refractive index (RI) of the elastomeric modifier (B) is less than 0.015, preferably less than 0.012, more preferably less than 0.010, when measured at 23 °C according to "Refractive Index" measurement as described below under "Measuring Methods"

Further, the elastomeric modifier is a soft elastomer which has at least one glass transition temperature of equal to or below -25 °C, preferably equal to or below -28 °C, more preferably equal to or below -30 °C. It is further preferred that the elastomeric modifier has no glass transition below -100°C.

In the following the polymer composition is defined in more detail.

**Propylene copolymer (A) matrix**

In a preferred embodiment of the present invention, the propylene copolymer (A) is featured by a moderately broad molecular weight distribution. The molecular weight distribution can be determined by Gel Permeation Chromatography (GPC) or by shear rheology. Accordingly it is preferred that the propylene copolymer (A) has

(a) a molecular weight distribution (Mw/Mn) as determined by GPC of at least 2.7, more preferably in the range of 2.7 to 4.5, still more preferably in the range of 2.9 to 4.0, like in the range of 2.9 to 3.7;
and/or

(b) a polydispersity index (PI) as calculated from shear rheology of at least 2.3 $Pa^{-1}$, more preferably in the range of 2.3 to 3.5 $Pa^{-1}$, still more preferably in the range of 2.4 to 3.2 $Pa^{-1}$, like in the range of 2.5 to 3.0 $Pa^{-1}$.

Preferably the propylene copolymer (A) according to this invention is monophasic. Accordingly it is preferred that the propylene copolymer (A) itself does not contain elastomeric (co)polymers forming inclusions as a second phase. The presence of second phases or the so called inclusions are for instance visible by high resolution microscopy, like electron microscopy or atomic force microscopy.

Preferably the propylene copolymer (A) according to this invention has been produced in the presence of a metallocene catalyst. The catalyst influences in particular the microstructure of the polymer. In particular, polypropylenes

prepared by using a metallocene catalyst provide a different microstructure compared to polypropylenes prepared by using Ziegler-Natta (ZN) catalysts. The most significant difference is the presence of regio-defects in metallocene-made polypropylenes. These regio-defects can be of three different types, namely 2,1-erythro (2,1e), 2,1-threo (2,1t) and 3,1 defects. A detailed description of the structure and mechanism of formation of regio-defects in polypropylene can be found in Chemical Reviews 2000,100(4),pages 1316-1327. By introducing defects into the polymer chain, such as comonomers, stereo-errors or regio-defects, the physical properties of polypropylene can be modified. In particular, by increasing the amount of chain defects, crystallinity and melting point of polypropylene can be reduced.

The term "2,1 regio defects" as used in the present invention defines the sum of 2,1 erythro regio-defects and 2,1 threo regio-defects.

Accordingly it is preferred that the propylene copolymer (A) according to this invention has 2,1 regio-defects, like 2,1 erythro regio-defects, of at least 0.1 %, more preferably of at least 0.2 %, still more preferably in the range of 0.2 to 4.0 %, determined by 13C-NMR spectroscopy. For example, the propylene copolymer (A) of the instant invention has 2,1 regio-defects, like 2,1 erythro regio-defects, of from 0.4 to 0.7 %, determined by 13C-NMR spectroscopy.

Preferably the propylene copolymer (A) comprises apart from propylene ethylene and/or C4 to C12 α-olefins. Accordingly the term "propylene copolymer" according to this invention is understood as a polypropylene comprising, preferably consisting of, units derivable from

(a) propylene, and
(b) ethylene and/or C4 to C12 α-olefins.

Thus the propylene copolymer (A) according to this invention comprises monomers copolymerizable with propylene, for example comonomers such as ethylene and/or C4 to C12 α-olefins, in particular ethylene and/or C4 to C8 α-olefins, e.g. 1-butene and/or 1-hexene. Preferably the propylene copolymer (A) according to this invention comprises, especially consists of, monomers copolymerizable with propylene from the group consisting of ethylene, 1-butene and 1-hexene. More specifically the propylene copolymer (A) of this invention comprises - apart from propylene - units derivable from ethylene and/or 1-butene. In a preferred embodiment the propylene copolymer (A) according to this invention comprises units derivable from ethylene and propylene only.

The propylene copolymer (A) according to the present invention preferably comprises at least two polymer fractions, like two or three polymer fraction, all of them being propylene copolymers. Preferably the random propylene copolymer (A) comprises at least two different propylene copolymer fractions, like two different propylene copolymer fractions, wherein further the two random propylene copolymer fractions differ in the comonomer content and/or in the melt flow rate $MFR_2$ (230 °C), preferably differ in the comonomer content and in the melt flow rate $MFR_2$ (230 °C).

Preferably one fraction of the two polymer copolymer fractions of the propylene copolymer (A) is the commoner lean fraction and the other fraction is the comonomer rich fraction, wherein more preferably the lean fraction and the rich fraction fulfill together in equation (I), more preferably in equation (Ia), still more preferably in equation (Ib),

$$\frac{Co\ (rich)}{Co\ (lean)} \geq 2.0 \quad \text{(I)},$$

$$2.0 \leq \frac{Co\ (rich)}{Co\ (lean)} \leq 6.0 \quad \text{(Ia)},$$

$$2.5 \leq \frac{Co\ (rich)}{Co\ (lean)} \leq 5.5 \quad \text{(Ib)}$$

wherein

Co (lean) is the comonomer content [mol.-%] of the propylene copolymer fraction with the lower comonomer content,
Co (rich)is the comonomer content [mol.-%] of the propylene copolymer fraction with the higher comonomer content.

In addition or alternatively to in equation (I) one fraction of the two polymer copolymer fractions of the propylene copolymer (A) is the low melt flow rate $MFR_2$ (230 °C) fraction and the other fraction is the high melt flow rate $MFR_2$ (230 °C) fraction, wherein more preferably the low flow fraction and the high flow fraction fulfill together in equation (II), more preferably in equation (IIa), still more preferably in equation (IIb),

$$\frac{MFR\ (high)}{MFR\ (low)} \geq 1.1 \quad \text{(II)}$$

$$1.2 \leq \frac{MFR\ (high)}{MFR\ (low)} \leq 5.0 \quad \text{(IIa)}$$

$$1.8 \leq \frac{MFR\ (high)}{MFR\ (low)} \leq 4.5 \quad \text{(IIb)}$$

wherein

MFR (high) is the melt flow rate $MFR_2$ (230 °C) [g/10min] of the propylene copolymer fraction with the higher melt flow rate $MFR_2$ (230 °C),
MFR (low) is the melt flow rate $MFR_2$ (230 °C) [g/10min] of the propylene copolymer fraction with the lower melt flow rate $MFR_2$ (230 °C).

Even more preferred the propylene copolymer (A) comprises, preferably consists of, a first propylene copolymer fraction (R-PP1) and a second propylene copolymer fraction (R-PP2), wherein further the first propylene copolymer fraction (R-PP1) and the second propylene copolymer fraction (R-PP2) differ in the comonomer content and/or in the melt flow rate $MFR_2$ (230 °C), preferably differ in the comonomer content and in the melt flow rate $MFR_2$ (230 °C).
Thus in one embodiment the first random propylene copolymer fraction (R-PP1) has a higher comonomer content and melt flow rate $MFR_2$ (230 °C) than the second random propylene copolymer fraction (R-PP2).
In another embodiment the first random propylene copolymer fraction (R-PP1) has a higher comonomer content but a lower melt flow rate $MFR_2$ (230 °C) than the second random propylene copolymer fraction (R-PP2).
In still another embodiment the second random propylene copolymer fraction (R-PP2) has a higher comonomer content but a lower melt flow rate $MFR_2$ (230 °C) than the first random propylene copolymer fraction (R-PP1).
In further embodiment the second random propylene copolymer fraction (R-PP2) has a higher comonomer content and melt flow rate $MFR_2$ (230 °C) than the first random propylene copolymer fraction (R-PP1). This embodiment is especially preferred.
Accordingly it is preferred that the first random propylene copolymer fraction (R-PP1) and the second random propylene copolymer fraction (R-PP2) fulfill together the inequation (III), more preferably inequation (IIIa), still more preferably inequation (IIIb),

$$\frac{Co\ (R-PP2)}{Co\ (R-PP1)} \geq 2.0 \quad \text{(III)},$$

$$2.0 \leq \frac{Co\ (R-PP2)}{Co\ (R-PP1)} \leq 6.0 \quad \text{(IIIa)},$$

$$2.5 \leq \frac{Co\ (R-PP2)}{Co\ (R-PP1)} \leq 5.5 \quad \text{(IIIb)}$$

wherein

Co (R-PP1) is the comonomer content [mol.-%] of the first propylene copolymer fraction (R-PP1),
Co (R-PP2) is the comonomer content [mol.-%] of the second propylene copolymer fraction (R-PP2).

In addition or alternatively to inequation (III) the first propylene copolymer fraction (R-PP1) and the second propylene copolymer fraction (R-PP2) fulfill together the inequation (IV), more preferably inequation (IVa), still more preferably inequation (IVb),

$$\frac{MFR\ (\text{R}-\text{PP2})}{MFR\ (\text{R}-\text{PP1})} \geq 1.1 \quad \text{(IV)}$$

$$1.2 \leq \frac{MFR\ (\text{R}-\text{PP2})}{MFR\ (\text{R}-\text{PP1})} \leq 5.0 \quad \text{(IVa)}$$

$$1.8 \leq \frac{MFR\ (\text{R}-\text{PP2})}{MFR\ (\text{R}-\text{PP1})} \leq 4.5 \quad \text{(IVb)}$$

wherein

MFR (R-PP1) is the melt flow rate $MFR_2$ (230 °C) [g/10min] of the first propylene copolymer fraction (R-PP1),
MFR (R-PP2) is the melt flow rate $MFR_2$ (230 °C) [g/10min] of the second propylene copolymer fraction (R-PP2).

It is especially preferred that the propylene copolymer (A) has a higher comonomer content and/or melt flow rate $MFR_2$ (230 °C) than the first random propylene copolymer fraction (R-PP1). It is in particular preferred that the propylene copolymer (A) has a higher comonomer content and melt flow rate $MFR_2$ (230 °C) than the first random propylene copolymer fraction (R-PP1).

Accordingly the random propylene copolymer (A) comprises, preferably consists of, the first random propylene copolymer fraction (R-PP1) and the second random propylene copolymer fraction (R-PP2), wherein further the random propylene copolymer (A) fulfills

(a)the inequation (V), more preferably inequation (Va), still more preferably inequation (Vb),

$$\frac{Co\ (R-PP)}{Co\ (R-PP1)} \geq 0.5 \quad \text{(V)},$$

$$0.5 \leq \frac{Co\ (R-PP)}{Co\ (R-PP1)} \leq 5.0 \quad \text{(Va)},$$

$$1.0 \leq \frac{Co\ (R-PP)}{Co\ (R-PP1)} \leq 3.0 \quad \text{(Vb)}$$

wherein

Co (R-PP1) is the comonomer content [mol.-%] of the first random propylene copolymer fraction (R-PP1),
Co (R-PP) is the comonomer content [mol.-%] of the propylene copolymer (A). and/or

(b)the inequation (VI), more preferably inequation (VIa), still more preferably inequation (VIb),

$$\frac{MFR\ (\text{R}-\text{PP})}{MFR\ (\text{R}-\text{PP1})} \geq 1.1 \quad \text{(VI)}$$

$$1.1 \leq \frac{MFR\ (\text{R}-\text{PP})}{MFR\ (\text{R}-\text{PP1})} \leq 3.0 \quad \text{(VIa)}$$

$$1.5 \leq \frac{MFR\ (\text{R}-\text{PP})}{MFR\ (\text{R}-\text{PP1})} \leq 2.90 \quad \text{(VIb)}$$

wherein

MFR (R-PP1) is the melt flow rate $MFR_2$ (230 °C) [g/10min] of the first random propylene copolymer fraction (R-PP1),
MFR (R-PP) is the melt flow rate $MFR_2$ (230 °C) [g/10min] of the propylene copolymer (A).

Thus it is preferred that the first random propylene copolymer fraction (R-PP1) has a comonomer content of equal or below 8.0 mol-%, more preferably of equal or below 5.0 mol.-%, yet more preferably in the range 1.0 to 8.0 mol-%, still more preferably in the range 1.5 to 5.0 mol-%, like in the range of 2.0 to 4.5 mol-%.
Preferably the first random propylene copolymer fraction (R-PP1) has a melt flow rate $MFR_2$ (230 °C) in the range of 0.2 to 8.0 g/10min, more preferably in the range 1.0 to 6.0 g/10min, still more preferably in the range of 2.5 to 5.0 g/10min.
On the other hand the second random propylene copolymer fraction (R-PP2) preferably has comonomer content in the range of more than 8.0 to 17.0 mol-%, still more preferably in the range 8.5 to 16.0 mol-%, yet more preferably in the range 9.0 to 15.5 mol-%.
Preferably the second random propylene copolymer fraction (R-PP2) has a melt flow rate $MFR_2$ (230 °C) in the range of 5.0 to 28.0 g/10min, more preferably in the range of 6.0 to 23.0 g/10min, still more preferably in the range of 7.0 to 20.0 g/10min.
The comonomers of the first propylene copolymer fraction (R-PP1) and random propylene copolymer fraction (R-PP2), respectively, copolymerizable with propylene are ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the first propylene copolymer fraction (R-PP1) and second propylene copolymer fraction (R-PP2), respectively, comprise, especially consist of, monomers copolymerizable with propylene from the group consisting of ethylene, 1-butene and 1-hexene. More specifically the first propylene copolymer fraction (R-PP1) and second propylene copolymer fraction (R-PP2), respectively, comprise - apart from propylene - units derivable from ethylene and/or 1-butene. In a preferred embodiment the first propylene copolymer fraction (R-PP1) and the second propylene copolymer fraction (R-PP2) comprise the same comonomers, i.e. ethylene only.
Preferably the weight ratio between the first propylene copolymer fraction (R-PP1) and the second propylene copolymer fraction (R-PP2) is 20/80 to 80/20, more preferably 30/70 to 70/30, like 35/65 to 65/35.
The propylene copolymer (A) according to this invention is preferably produced in a sequential polymerization process in the presence of a metallocene catalyst, more preferably in the presence of a catalyst (system) as defined below.
The term "sequential polymerization process" indicates that the propylene copolymer (R-PP) is produced in at least two reactors, preferably in two reactors, connected in series. Accordingly the present process comprises at least a first reactor (R1) and a second reactor (R2). The term "polymerization reactor" shall indicate that the main polymerization takes place. Thus in case the process consists of two polymerization reactors, this definition does not exclude the option that the overall process comprises for instance a pre-polymerization step in a pre-polymerization reactor. The term "consist of" is only a closing formulation in view of the main polymerization reactors.
The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer.
According to the present invention the slurry reactor (SR) is preferably a (bulk) loop reactor (LR).
The second reactor (R2) is preferably a gas phase reactor (GPR). Such gas phase reactor (GPR) can be any mechanically mixed or fluid bed reactor. For example the gas phase reactor (GPR) can be a mechanically agitated fluid bed reactor with gas velocities of at least 0.2 m/sec. Thus it is appreciated that the gas phase reactor is a fluidized bed type reactor, optionally with a mechanical stirrer.
Thus in a preferred embodiment the first reactor (R1) is a slurry reactor (SR), like a loop reactor (LR), whereas the second reactor (R2) is a gas phase reactor (GPR). Accordingly for the instant process two polymerization reactors, namely a slurry reactor (SR), like a loop reactor (LR), and a gas phase reactor (GPR) are connected in series. If needed prior to the slurry reactor (SR) a pre-polymerization reactor is placed.
Preferably in the first reactor (R1) the first propylene copolymer fraction (R-PP1) of the propylene copolymer is produced, whereas in the second rector (R2) the second propylene copolymer fraction (R-PP2) is produced.
A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.
A further suitable slurry-gas phase process is the Spheripol® process of Basell described e.g.in figure 20 of the paper by Galli and Vecello, Prog.Polym.Sci. 26 (2001) 1287-1336.
Preferably, in the instant process for producing the propylene copolymer (R-PP) as defined above the conditions for the first reactor (R1), i.e. the slurry reactor (SR), like a loop reactor (LR), of step (a) may be as follows:

- the temperature is within the range of 40 °C to 110 °C, preferably between 60 °C and 100 °C, like 68 to 95 °C,
- the pressure is within the range of 20 bar to 80 bar, preferably between 40 bar to 70 bar,
- hydrogen can be added for controlling the molar mass in a manner known per se.

Subsequently, the reaction mixture from step (a) (containing preferably the first propylene copolymer fraction (R-PP1)) is transferred to the second reactor (R2), i.e. gas phase reactor (GPR), whereby the conditions are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The residence time can vary in the two reaction zones.

In one embodiment of the process for producing the propylene copolymer (R-PP) the residence time the first reactor (R1), i.e. the slurry reactor (SR), like a loop reactor (LR), is in the range 0.2 to 4 hours, e.g. 0.3 to 1.5 hours and the residence time in the gas phase reactor (GPR) will generally be 0.2 to 6.0 hours, like 0.5 to 4.0 hours.

If desired, the polymerization may be effected in a known manner under supercritical conditions in the first reactor (R1), i.e. in the slurry reactor (SR), like in the loop reactor (LR), and/or as a condensed mode in the gas phase reactor (GPR).

The prepolymerization reaction is typically conducted at a temperature of 0 to 50 °C, preferably from 10 to 45 °C, and more preferably from 15 to 40 °C.

The polymerization takes preferably place in the presence of a metallocene catalyst system, e.g. solid single site catalyst system, said metallocene catalyst system, e.g. said solid single site catalyst system comprises

(i) a transition metal compound of formula (I)

$$R_n(Cp')_2MX_2 \qquad (I)$$

wherein

"M" is zirconium (Zr) or hafnium (Hf),

each "X" is independently a monovalent anionic σ-ligand,

each "Cp' " is a cyclopentadienyl-type organic ligand independently selected from the group consisting of substituted cyclopentadienyl, substituted indenyl, substituted tetrahydroindenyl, and substituted or unsubstituted fluorenyl, said organic ligands coordinate to the transition metal (M),

"R" is a bivalent bridging group linking said organic ligands (Cp'),

"n" is 1 or 2, preferably 1, and

(ii) optionally a cocatalyst (Co) comprising an element (E) of group 13 of the periodic table (IUPAC), preferably a cocatalyst (Co) comprising a compound of Al.

In one specific embodiment the solid single site catalyst system has a porosity measured according ASTM 4641 of less than 1.40 ml/g and/or a surface area measured according to ASTM D 3663 of lower than 25 $m^2/g$. Preferably the solid catalyst system (SCS) has a surface area of lower than 15 $m^2/g$, yet still lower than 10 $m^2/g$ and most preferred lower than 5 $m^2/g$, which is the lowest measurement limit. The surface area according to this invention is measured according to ASTM D 3663 ($N_2$). Alternatively or additionally it is appreciated that the solid single site catalyst system has a porosity of less than 1.30 ml/g and more preferably less than 1.00 ml/g. The porosity has been measured according to ASTM 4641 ($N_2$). In another preferred embodiment the porosity is not detectable when determined with the method applied according to ASTM 4641 (N2).

Furthermore the solid single site catalyst system typically has a mean particle size of not more than 500 μm,

i.e. preferably in the range of 2 to 500 μm, more preferably 5 to 200 μm. It is in particular preferred that the mean particle size is below 80 μm, still more preferably below 70 μm. A preferred range for the mean particle size is 5 to 70 μm, or even 10 to 60 μm.

As stated above the transition metal (M) is zirconium (Zr) or hafnium (Hf), preferably zirconium (Zr).

The term "σ-ligand" is understood in the whole description in a known manner, i.e. a group bound to the metal via a sigma bond. Thus the anionic ligands "X" can independently be halogen or be selected from the group consisting of R', OR', $SiR'_3$, $OSiR'_3$, $OSO_2CF_3$, OCOR', SR', $NR'_2$ or $PR'_2$ group wherein R' is independently hydrogen, a linear or branched, cyclic or acyclic, $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl, $C_7$-$C_{20}$-arylalkyl, $C_7$-$C_{20}$-alkylaryl, $C_8$-$C_{20}$-arylalkenyl, in which the R' group can optionally contain one or more heteroatoms belonging to groups 14 to 16. In a preferred embodiments the anionic ligands "X" are identical and either halogen, like Cl, or methyl or benzyl.

A preferred monovalent anionic ligand is halogen, in particular chlorine (Cl).

The substituted cyclopentadienyl-type ligand(s) may have one or more substituent(s) being selected from the group consisting of halogen, hydrocarbyl (e.g. $C_1$-$C_{20}$-alkyl, $C_2$-$C_{20}$-alkenyl, $C_2$-$C_{20}$-alkynyl, , $C_3$-$C_{20}$-cycloalkyl, like $C_1$-$C_{20}$-alkyl substituted $C_5$-$C_{20}$-cycloalkyl, $C_6$-$C_{20}$-aryl, $C_5$-$C_{20}$-cycloalkyl substituted $C_1$-$C_{20}$-alkyl wherein the cycloalkyl residue is substituted by $C_1$-$C_{20}$-alkyl, $C_7$-$C_{20}$-arylalkyl, $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, -SiR"$_3$ , -SR", -PR"$_2$ or -NR"$_2$, each R" is independently a hydrogen or hydrocarbyl (e. g. $C_1$-$C_{20}$-alkyl, $C_1$-$C_{20}$-alkenyl, $C_2$-$C_{20}$-alkynyl, $C_3$-$C_{12}$-cycloalkyl, or $C_6$-$C_{20}$-aryl) or e.g. in case of -NR"$_2$, the two substituents R" can form a ring, e.g. five-or six-membered ring, together with the nitrogen atom where they are attached to.

Further "R" of formula (I) is preferably a bridge of 1 to 4 atoms, such atoms being independently carbon (C), silicon (Si), germanium (Ge) or oxygen (O) atom(s), whereby each of the bridge atoms may bear independently substituents, such as $C_1$-$C_{20}$-hydrocarbyl, tri($C_1$-$C_{20}$-alkyl)silyl, tri($C_1$-$C_{20}$-alkyl)siloxy and more preferably "R" is a one atom bridge like e.g. -SiR'"$_2$-, wherein each R'" is independently $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl, alkylaryl or arylalkyl, or tri($C_1$-$C_{20}$-alkyl)silyl- residue, such as trimethylsilyl-, or the two R'" can be part of a ring system including the Si bridging atom.

In a preferred embodiment the transition metal compound has the formula (II)

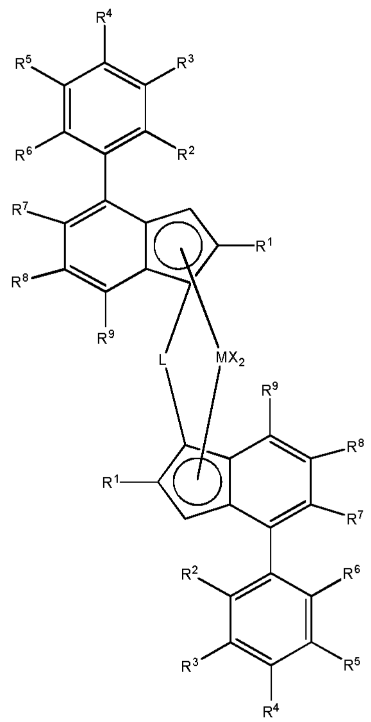

wherein

M is zirconium (Zr) or hafnium (Hf), preferably zirconium (Zr),

X are ligands with a σ-bond to the metal "M", preferably those as defined above for formula (I), preferably chlorine (Cl) or methyl ($CH_3$), the former especially preferred,

$R^1$ are equal to or different from each other, and are selected from the group consisting of linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$ cycloalkyl, $C_6$-$C_{20}$ aryl, $C_7$-$C_{20}$ alkylaryl, and $C_7$-$C_{20}$ arylalkyl, optionally containing one or more heteroatoms of groups 14 to 16 of the Periodic Table (IUPAC), preferably they are equal to each other, and are $C_1$-$C_{10}$ linear or branched hydrocarbyl, more preferably are equal to each other, and are $C_1$-$C_6$ linear or branched alkyl,

$R^2$ to $R^6$ are equal to or different from each other and are selected from the group consisting of hydrogen, linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$-cycloalkyl, $C_6$-$C_{20}$-aryl, $C_7$-$C_{20}$-alkylaryl, and $C_7$-$C_{20}$-arylalkyl, optionally containing one or more heteroatoms of groups 14 to 16 of the Periodic Table (IUPAC), preferably are equal to each other and are $C_1$-$C_{10}$ linear or branched hydrocarbyl, more preferably are $C_1$-$C_6$ linear or branched alkyl,

$R^7$ and $R^8$ are equal to or different from each other and selected from the group consisting of hydrogen, linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$ alkyl, $C_3$-$C_{20}$-cycloalkyl, $C_6$-$C_{20}$ aryl, $C_7$-$C_{20}$ alkylaryl, $C_7$-$C_{20}$ arylalkyl, optionally containing one or more heteroatoms of groups 14 to 16 of the Periodic Table (IUPAC), $SiR^{10}_3$, $GeR^{10}_3$, $OR^{10}$, $SR^{10}$ and $NR^{10}_2$, wherein

$R^{10}$ is selected from the group consisting of linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$-cycloalkyl, $C_6$-$C_{20}$-aryl, $C_7$-$C_{20}$-alkylaryl, and $C_7$-$C_{20}$-arylalkyl, optionally containing one or more heteroatoms of groups 14 to 16 of the Periodic Table (IUPAC), and/or

$R^7$ and $R^8$ being optionally part of a $C_4$-$C_{20}$-carbon ring system together with the indenyl carbons to which they are attached, preferably a $C_5$ ring, optionally one carbon atom can be substituted by a nitrogen, sulfur or oxygen atom,

$R^9$ are equal to or different from each other and are selected from the group consisting of hydrogen, linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$ cycloalkyl, $C_6$-$C_{20}$-aryl, $C_7$-$C_{20}$-alkylaryl, $C_7$-$C_{20}$-arylalkyl, $OR^{10}$, and $SR^{10}$, wherein

$R^{10}$ is defined as before,

preferably $R^9$ are equal to or different from each other and are H or $CH_3$, most preferably $R^9$ are both H.

L is a bivalent group bridging the two indenyl ligands, preferably being a $C_2R^{11}_4$ unit or a $SiR^{11}_2$ or $GeR^{11}_2$, wherein,

$R^{11}$ is selected from the group consisting of H, linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl, optionally containing one or more heteroatoms of groups 14 to 16 of the Periodic Table (IUPAC),

preferably $Si(CH_3)_2$, $SiCH_3C_6H_{11}$, or $SiPh_2$, wherein $C_6H_{11}$ is cyclohexyl.

Preferably the transition metal compound of formula (II) is $C_2$-symmetric or pseudo-$C_2$-symmetric. Concerning the definition of symmetry it is referred to Resconi et al. Chemical Reviews, 2000, Vol. 100, No. 4 1263 and references cited therein.

Preferably the residues $R^1$ are equal to or different from each other, more preferably equal, and are selected from the group consisting of linear saturated $C_1$-$C_{10}$-alkyl, linear unsaturated $C_1$-$C_{10}$-alkyl, branched saturated $C_1$-$C_{10}$-alkyl, branched unsaturated $C_1$-$C_{10}$-alkyl and $C_7$-$C_{12}$-arylalkyl. Even more preferably the residues $R^1$ are equal to or different from each other, more preferably equal, and are selected from the group consisting of linear saturated $C_1$-$C_6$-alkyl, linear unsaturated $C_1$-$C_6$-alkyl, branched saturated $C_1$-$C_6$-alkyl, branched unsaturated $C_1$-$C_6$-alkyl and $C_7$-$C_{10}$-arylalkyl. Yet more preferably the residues $R^1$ are equal to or different from each other, more preferably equal, and are selected from the group consisting of linear or branched $C_1$-$C_4$-hydrocarbyl, such as for example methyl or ethyl.

Preferably the residues $R^2$ to $R^6$ are equal to or different from each other and linear saturated $C_1$-$C_4$-alkyl or branched saturated $C_1$-$C_4$-alkyl. Even more preferably the residues $R^2$ to $R^6$ are equal to or different from each other, more preferably equal, and are selected from the group consisting of methyl, ethyl, iso-propyl and tert-butyl.

Preferably $R^7$ and $R^8$ are equal to or different from each other and are selected from hydrogen and methyl, or they are part of a 5-carbon ring including the two indenyl ring carbons to which they are attached. In another preferred

embodiment, $R^7$ is selected from $OCH_3$ and $OC_2H_5$, and $R^8$ is tert-butyl.

In a preferred embodiment the transition metal compound is rac-methyl(cyclohexyl)silanediyl bis(2-methyl-4-(4-tert-butylphenyl)indenyl)zirconium dichloride.

In a second preferred embodiment, the transition metal compound is rac-dimethylsilanediyl bis(2-methyl-4-phenyl-1,5,6,7-tetrahydro-s-indacen-1-yl)zirconium dichloride.

In a third preferred embodiment, the transition metal compound is rac-dimethylsilanediyl bis(2-methyl-4-phenyl-5-methoxy-6-tert-butylindenyl)zirconium dichloride.

As a further requirement the solid single site catalyst system according to this invention may comprise a cocatalyst (Co) comprising an element (E) of group 13 of the periodic table (IUPAC), for instance the cocatalyst (Co) comprises a compound of Al. Examples of such cocatalyst (Co) are organo aluminium compounds, such as aluminoxane compounds.

Such compounds of Al, preferably aluminoxanes, can be used as the only compound in the cocatalyst (Co) or together with other cocatalyst compound(s). Thus besides or in addition to the compounds of Al, i.e. the aluminoxanes, other cation complex forming cocatalyst compounds, like boron compounds can be used. Said cocatalysts are commercially available or can be prepared according to the prior art literature. Preferably however in the manufacture of the solid catalyst system only compounds of Al as cocatalyst (Co) are employed.

In particular preferred cocatalysts (Co) are the aluminoxanes, in particular the $C_1$ to $C_{10}$-alkylaluminoxanes, most particularly methylaluminoxane (MAO).

Preferably, the organo-zirconium compound of formula (I) and the cocatalyst (Co) of the solid single site catalyst system represent at least 70 wt%, more preferably at least 80 wt%, even more preferably at least 90 wt%, even further preferably at least 95 wt% of the solid catalyst system.

Thus it is appreciated that the solid single site catalyst system is featured by the fact that it is self-supported, i.e. it does not comprise any catalytically inert support material, like for instance silica, alumina or $MgCl_2$, which is otherwise commonly used in heterogeneous catalyst systems, i.e. the catalyst is not supported on external support or carrier material. As a consequence of that the solid single site catalyst system is self-supported and it has a rather low surface area.

In one embodiment the solid single site catalyst system is obtained by the emulsion/solidification technology, the basic principles of which are described in WO 03/051934. This document is herewith included in its entirety by reference.

Hence the solid single site catalyst system is preferably in the form of solid catalyst particles, obtainable by a process comprising the steps of

a) preparing a solution of one or more catalyst components;

b) dispersing said solution in a second solvent to form an emulsion in which said one or more catalyst components are present in the droplets of the dispersed phase,

c) solidifying said dispersed phase to convert said droplets to solid particles and optionally recovering said particles to obtain said catalyst.

Preferably a first solvent, more preferably a first organic solvent, is used to form said solution. Still more preferably the organic solvent is selected from the group consisting of a linear alkane, cyclic alkane, aromatic hydrocarbon and halogen-containing hydrocarbon.

Moreover the second solvent forming the continuous phase is an inert solvent towards to catalyst components. The second solvent might be immiscible towards the solution of the catalyst components at least under the conditions (like temperature) during the dispersing step. The term "immiscible with the catalyst solution" means that the second solvent (continuous phase) is fully immiscible or partly immiscible i.e. not fully miscible with the dispersed phase solution.

Preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably $C_3$-$C_{30}$-perfluoroalkanes, -alkenes or -cycloalkanes, more preferred $C_4$-$C_{10}$-perfluoro-alkanes,-alkenes or -cycloalkanes, particularly preferred perfluorohexane, perfluoroheptane, perfluorooctane or perfluoro (methylcyclohexane) or perfluoro (1,3-dimethylcyclohexane) or a mixture thereof.

Furthermore it is preferred that the emulsion comprising said continuous phase and said dispersed phase is a bi-or multiphasic system as known in the art. An emulsifier may be used for forming and stabilising the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying

agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated $C_1$-$C_n$ (suitably $C_4$-$C_{30}$ or $C_5$-$C_{15}$) alcohol (e.g. highly fluorinated heptanol, octanol or nonanol), oxide (e.g. propenoxide) or acrylate ester which reacts e.g. with a cocatalyst component, such as aluminoxane to form the "actual" surfactant.

In principle any solidification method can be used for forming the solid particles from the dispersed droplets. According to one preferable embodiment the solidification is effected by a temperature change treatment. Hence the emulsion subjected to gradual temperature change of up to 10°C/min, preferably 0.5 to 6°C/min and more preferably 1 to 5°C/min. Even more preferred the emulsion is subjected to a temperature change of more than 40°C, preferably more than 50°C within less than 10 seconds, preferably less than 6 seconds.

For further details, embodiments and examples of the continuous and dispersed phase system, emulsion formation method, emulsifying agent and solidification methods reference is made e.g. to the above cited international patent application WO 03/051934.

All or part of the preparation steps can be done in a continuous manner. Reference is made to WO 2006/069733 describing principles of such a continuous or semi-continuous preparation methods of the solid catalyst types, prepared via emulsion/solidification method.

The above described catalyst components are prepared according to the methods described in WO 01/48034.

**(Elastomeric modifiers (B))**

As mentioned above, the elastomeric modifier (B) according to the present invention is selected from ethylene-propylene elastomer (B-1), ethylene-alpha olefin elastomer (B-2) and styrenic elastomer (B-3).

It is especially preferred that the elastomeric modifier (B) has high level of softness, in term of having a storage modulus (G') determined by dynamic mechanical analysis (DMA) of not more than 50 MPa, preferably not more than 40 MPa, more preferably not more than 30 MPa. Said storage modulus (G') shall preferably not be lower than 5 MPa.

In one embodiment of the present invention, the ethylene-propylene elastomer (B-1) preferably contains 80 to 92 wt% of propylene monomers, more preferably 83 to 91 wt%, most preferably 85 to 90 wt%, based on the total ethylene-propylene elastomer.

It is preferred that the ethylene-propylene elastomer (B-1) has a weight average molecular weight of 40,000 to 300,000 g/mol, more preferably of 80,000 to 200,000 g/mol. The molecular weight distribution (MWD) of the ethylene-propylene elastomer (B-1) preferably is from 1.8 to 4.5, more preferably from 2 to 3.

The ethylene-propylene elastomer (B-1) may be produced by known polymerisation processes such as solution, suspension and gas-phase polymerisation using conventional catalysts. Ziegler Natta catalysts as well as metallocene catalysts are suitable catalysts.

A widely used process is the solution polymerisation. Ethylene, propylene and catalyst systems are polymerised in an excess of hydrocarbon solvent.

Stabilisers and oils, if used, are added directly after polymerisation. The solvent and unreacted monomers are then flashed off with hot water or steam, or with mechanical devolatilisation. The polymer, which is in crumb form, is dried with dewatering in screens, mechanical presses or drying ovens. The crumb is formed into wrapped bales or extruded into pellets.

The suspension polymerisation process is a modification of bulk polymerisation. The monomers and catalyst system are injected into the reactor filled with propylene. The polymerisation takes place immediately, forming crumbs of polymer that are not soluble in the propylene. Flashing off the propylene and comonomer completes the polymerisation process.

The gas-phase polymerisation technology consists of one or more vertical fluidised beds. Monomers and nitrogen in gas form along with catalyst are fed to the reactor and solid product is removed periodically. Heat of reaction is removed through the use of the circulating gas that also serves to fluidise the polymer bed. Solvents are not used, thereby eliminating the need for solvent stripping, washing and drying.

The production of ethylene-propylene elastomers is also described in detail in e.g. US 3,300,459, US 5,919,877, EP 0 060 090 A1 and in a company publication by EniChem "DUTRAL, Ethylene-Propylene Elastomers", pages 1-4 (1991).

Preferably, ethylene-propylene elastomers, which are commercially available and which fulfill the indicated requirements, can be used.

According to another embodiment of the present invention, the ethylene-alpha olefin elastomer (B-2) is a very low density ethylene copolymer; more preferably a very low density ethylene copolymer polymerised using single site, preferably metallocene catalyst.

The ethylene-alpha olefin elastomer (B-2) suitable for the current inventions is a copolymer of ethylene and propylene or a C4 - C10 alpha-olefin.

Suitable C4 - C10 alpha-olefin include 1-butene, 1-hexene and 1-octene, preferably butene or octene and more preferably octene.

Preferably copolymers of ethylene and 1-octene are used.

Suitable ethylene-alpha olefin elastomer (B-2) has a density in the range of 0.860 - 0.915 g/cm3, preferably in the range of 0.860 to 0.910 g/cm3, more preferably in the range of 0.860 - 905 g/cm3.

The ethylene-alpha olefin elastomer (B-2) preferably has a melt flow rate $MFR_2$ (190°C) of at least 0,5 g/10 min, like 1,0 g/10 min.

The ethylene-alpha olefin elastomer (B-2) suitable may also have an $MFR_2$ (190°C) of less than about 30 g/10 min, like less than 25 g/10min, such as less than 21 g/10min, preferably between 0.5 and 18g/10min and more preferably between 0.8 and 15 g/10 min, such as 1.0 - 12 g/10min.

The melting points ($T_m$) of suitable ethylene based plastomers (measured with DSC according to ISO 11357-3:1999) are below 130°C, preferably below 120°C, more preferably below 110°C and most preferably below 100°C.

Furthermore a suitable ethylene-alpha olefin elastomer (B-2) has at least one glass transition temperature $T_g$ (measured with DMTA according to ISO 6721-7) of below -20 °C, preferably below -25 °C.

In case the ethylene based plastomer is a copolymer of ethylene and a C4 - C10 alpha olefin it has an ethylene content from 50 to 95 wt.%, preferably from 55 to 90 wt.% and more preferably from 60 to 85 wt.%.

The molecular mass distribution Mw/Mn is most often below 4.0, such as 3.8 or below, but is at least 1.7. It is preferably between 3.5 and 1.8.

An ethylene-alpha olefin elastomer (B-2) suitable for the current invention is commercially available, i.a. from Borealis Plastomers (NL) under the trade name Queo, from DOW Chemical Corp (USA) under the trade name Engage or Affinity, or from Mitsui under the trade name Tafmer.

Alternately the ethylene-alpha olefin elastomer (B-2) can be prepared by known processes, in a one stage or two stage polymerisation process, comprising solution polymerisation, slurry polymerisation, gas phase polymerisation or combinations therefrom, in the presence of suitable catalysts, like vanadium oxide catalysts or single-site catalysts, e.g. metallocene or constrained geometry catalysts, known to the art skilled persons.

Preferably the ethylene-alpha olefin elastomer (B-2) is prepared by a one stage or two stage solution polymerisation process, especially by high temperature solution polymerisation process at temperatures higher than 100°C.

Such process is essentially based on polymerising the monomer and a suitable comonomer in a liquid hydrocarbon solvent in which the resulting polymer is soluble. The polymerisation is carried out at a temperature above the melting point of the polymer, as a result of which a polymer solution is obtained. This solution is flashed in order to separate the polymer from the unreacted monomer and the solvent. The solvent is then recovered and recycled in the process.

Preferably the solution polymerisation process is a high temperature solution polymerisation process, using a polymerisation temperature of higher than 100°C. Preferably the polymerisation temperature is at least 110°, more preferably at least 150°C. The polymerisation temperature can be up to 250°C.

The pressure in such a solution polymerisation process is preferably in a range of 10 to 100 bar, preferably 15 to 100 bar and more preferably 20 to 100 bar.

The liquid hydrocarbon solvent used is preferably a C5-12-hydrocarbon which may be unsubstituted or substituted by C1-4 alkyl group such as pentane, methyl pentane, hexane, heptane, octane, cyclohexane, methylcyclohexane and hydrogenated naphtha. More preferably unsubstituted C6-10-hydrocarbon solvents are used.

A known solution technology suitable for the process according to the invention is the COMPACT technology.

According to another embodiment of the present invention, a styrenic based elastomer (B-3) may be selected to be the modifier in the polymer composition. It has been discovered that not any styrenic thermoplastic elastomer is suitable for the present invention but only a specific class of such elastomers. Accordingly for the present invention styrenic based elastomer (B-3) with rather low styrene content, i.e. being equal or below 15 wt%, is preferably used.

Preferably the styrenic based elastomer (B-3) can be a styrene-ethylene/butylene-styrene (SEBS) block copolymer and/or a hydrogenated styrene-vinyl isoprene (SIS) block rubber.

Accordingly it is appreciated that the styrenic based elastomer (B-3), preferably the styrene-ethylene/butylene-styrene (SEBS) block copolymer and/or the hydrogenated styrene-vinyl isoprene (SIS) block rubber, has (have) a styrene content of equal or below 15 wt.-%, more preferably of equal or below 14 wt-%, yet more preferably of equal or below 13 wt.-%. On the other hand the styrene content in the styrenic based elastomer (B-3), preferably in the styrene-ethylene/butylene-styrene (SEBS) block copolymer and/or in the hydrogenated styrene-vinyl isoprene (SIS) block rubber, shall not fall below 5 wt.-%. Thus a preferred range is of 5 to 15 wt.-%, more preferred of 10 to 15 wt.-% and yet more preferred of 11 to 14 wt.-%.

Further it is appreciated that the styrenic based elastomer(s) (B-3), preferably the styrene-ethylene/butylene-styrene (SEBS) block copolymer and/or the hydrogenated styrene-vinyl isoprene (SIS) block rubber, has (have) a mod-

erate melt flow rate $MFR_2$ (230 °C), i.e. not more than 20.0 g/10min, more preferably not more than 10.0 g/10min, still more preferably not more than 6.0 g/10min. On the other hand the melt flow rate of the styrenic based elastomer(s) (B-3), preferably the styrene-ethylene/butylene-styrene (SEBS) block copolymer and/or the hydrogenated styrene-vinyl isoprene (SIS) block rubber, shall not fall below 1.0 g/10min. Accordingly, a preferred range is of 1.0 to 20.0 g/10min, more preferred of 2.0 to 10.0 g/10min.

Further the styrenic based elastomer(s) (B-3), preferably the styrene-ethylene/butylene-styrene (SEBS) block copolymer and/or the hydrogenated styrene-vinyl isoprene (SIS) block rubber, may be defined by its density. Thus it is appreciated that the styrenic based elastomer (B-3), preferably the styrene-ethylene/butylene-styrene (SEBS) block copolymer and/or the hydrogenated styrene-vinyl isoprene (SIS) block rubber, has (have) a density of equal or below 0.905 g/cm$^3$, more preferred in the range of 0,850 to 0.905 g/cm$^3$.

**Polymer Composition**

In a preferred embodiment according to the present invention, the polymer composition comprises at least two glass transition points glass transition points ($T_g$), wherein one of the two glass transition points ($T_g1$) is at temperature range of -10 to +2 °C, preferred of -10 to 0 °C, more preferred of -8 to 0 °C; and another glass transition points ($T_g2$) is at temperature range of -55 to -18 °C, preferably of -50 to -20 °C, more preferably of -45 to -22 °C.

Furthermore, it is preferred that the polymer composition has a certain extent of softness, in term of having a storage modulus (G') determined by dynamic mechanical analysis (DMA) of not more than 300 MPa, preferably not more than 280 MPa, more preferably not more than 250 MPa. Said storage modulus (G') shall preferably not be lower than 100 MPa.

The impact strength of the polymer composition is according to the Charpy notched impact strength test ISO 179 1eA is preferably at +23°C at least 48 kJ/m$^2$, preferably at least 55 kJ/m$^2$ kJ/m$^2$, more preferably at least 70 kJ/m$^2$, and at -20 °C of at least 0.9 kJ/m$^2$, preferably at least 1 kJ/m$^2$, more preferably at least 1.2 kJ/m$^2$.

Furthermore, the polymer composition of the present invention preferably shows clarity of not less than 95%, preferably not less than 96% determined according to ATSM D1003-00 on injection moulded plaques. The haze of the polymer composition of the present invention is preferably below 25%, more preferably below 24%, even below 22% according to ATSM D1003-00 on injection moulded plaques.

The polymer composition as defined in the instant invention may still contain up to 5.0 wt% additives, like $\alpha$-nucleating agents and antioxidants, as well as slip agents and antiblocking agents. Preferably the additive content (without $\alpha$-nucleating agents) is below 3.0 wt%, like below 1.0 wt%.

Preferably the polymer composition comprises an $\alpha$-nucleating agent. Even more preferred the present invention is free of $\beta$-nucleating agents. The $\alpha$-nucleating agent is preferably selected from the group consisting of

(i) salts of monocarboxylic acids and polycarboxylic acids, e.g. sodium benzoate or aluminum tert-butylbenzoate, and

(ii)dibenzylidenesorbitol (e.g. 1,3 : 2,4 dibenzylidenesorbitol) and $C_1$-$C_8$-alkyl-substituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and

(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and

(iv) vinylcycloalkane polymer and vinylalkane polymer (as discussed in more detail below), and

(v) mixtures thereof.

Such additives are generally commercially available and are described, for example, in "Plastic Additives Handbook", 5th edition, 2001 of Hans Zweifel.

Preferably the polymer composition contains up to 2.0 wt% of the $\alpha$-nucleating agent. In a preferred embodiment, the the propylene copolymer (A) contains not more than 2000 ppm, more preferably of 1 to 2000 ppm, more preferably of 5 to 1500 ppm of a $\alpha$-nucleating agent, in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, vinylcycloalkane polymer, vinylalkane polymer, and mixtures thereof.

The present invention is not only directed to the present polymer composition but also to articles made therefrom. Accordingly in a further embodiment the present invention is directed to articles like packaging material, comprising at

least 70 wt%, preferably comprising at least 80 wt%, more preferably comprising at least 90 wt%, still more preferably comprising at least 95 wt%, yet more preferably comprising at least 99 wt%, of the present polymer composition. Preferred articles are containers, e.g. pouches, comprising, preferably, consisting of the present polymer composition. Typically such containers are made from films, thermoformed or injection moulded components. Accordingly the present invention is also directed to films or sheets comprising, preferably consisting of, the present polymer composition. Preferably the film is made by cast film or blow film or roll-stack technology. Additionally, the present invention is directed to injection moulded containers like cups or pails comprising, preferably comprising in the amounts mentioned in this paragraph, more preferably consisting of, the present polymer composition.

Preferably, the film comprising polymer composition of the present invention has a sealing initiation temperature of not higher than 106 °C, more preferably of not higher than 104 °C, still more preferably of not higher than 102 °C.

Furthermore, it is preferred that the film comprising polymer composition of the present invention has similar relative tear resistances in the machine direction (MD) and in the transverse direction (TD). The difference of relative tear resistances in the machine direction (MD) and in the transverse direction (TD) is preferably not more than 80 N/mm, more preferably not more than 70 N/mm, still preferably not more than 55 N/mm.

The present invention is also directed to the use of the propylene copolymer (R-PP) for film article, thermoformed article, or injection moulded article, like a pouch, cup or container.

The following examples serve to further illustrate the present invention without limiting it.

**Examples and measuring methods**

The following definitions of terms and determination methods apply for the above general description of the invention as well as to the below examples unless otherwise defined.

**1. Measuring Methods**

**Calculation** of comonomer content of the second propylene copolymer fraction (R-PP2):

$$\frac{C(A) - w(PP1)x\,C(PP1)}{w(PP2)} = C(PP2) \quad (I)$$

wherein

| | |
|---|---|
| w(PP1) | is the weight fraction [in wt%] of the first propylene copolymer fraction (R-PP1), |
| w(PP2) | is the weight fraction [in wt%] of second propylene copolymer fraction (R-PP2), |
| C(PP1) | is the comonomer content [in mol-%] of the first random propylene copolymer fraction (R-PP1), |
| C(A) | is the comonomer content [in mol-%] of the random propylene copolymer (A), |
| C(PP2) | is the calculated comonomer content [in mol-%] of the second random propylene copolymer fraction (R-PP2). |

**Calculation** of melt flow rate $MFR_2$ (230 °C) of the second propylene copolymer fraction (R-PP2):

$$MFR(PP2) = 10^{\left[\frac{\log(MFR(A)) - w(PP1)\;x\;\log(MFR(PP1))}{w(PP2)}\right]} \quad (III)$$

wherein

| | |
|---|---|
| w(PP1) | is the weight fraction [in wt%] of the first propylene copolymer fraction (R-PP1), |
| w(PP2) | is the weight fraction [in wt%] of second propylene copolymer fraction (R-PP2), |
| MFR(PP1) | is the melt flow rate $MFR_2$ (230 °C) [in g/10min] of the first propylene copolymer fraction (R-PP1), |
| MFR(A) | is the melt flow rate $MFR_2$ (230 °C) [in g/10min] of the propylene copolymer (A), |
| MFR(PP2) | is the calculated melt flow rate $MFR_2$ (230 °C) [in g/10min] of the second propylene copolymer fraction (R-PP2). |

**$MFR_2$ (230 °C)** of propylene copolymer (A), ethylene-propylene elastomer (B-1), and styrenic elastomer (B-3) is measured according to ISO 1133 (230 °C, 2.16 kg load), **$MFR_2$ (190°C)** of the ethylene-alpha olefin elastomer (B-2) is measured according to ISO 1133 (190 °C, 2.16 kg load).

**Quantification of copolymer microstructure by NMR spectroscopy**

Quantitative nuclear-magnetic resonance (NMR) spectroscopy was used to quantify the comonomer content of the polymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125 °C using nitrogen gas for all pneumatics. Approximately 200 mg of material was dissolved in 3 ml of 1,2-tetrachloroethane-$d_2$ (TCE-$d_2$) along with chromium-(III)-acetylacetonate ($Cr(acac)_3$) resulting in a 65 mM solution of relaxation agent in solvent as described in G. Singh, A. Kothari, V. Gupta, Polymer Testing 2009, 28(5), 475.

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6k) transients were acquired per spectra. Quantitative $^{13}C\{^1H\}$ NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer.

The comonomer fraction was quantified using the method of W-J. Wang and S. Zhu, Macromolecules 2000, 33, 1157, through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

The mole percent comonomer incorporation was calculated from the mole fraction.

**The xylene solubles (XCS, wt%):** Content of xylene cold solubles (XCS) is determined at 25 °C according ISO 16152; first edition; 2005-07-01

**The hexane extractable fraction** is determined according to FDA method (federal registration, title 21, Chapter 1, part 177, section 1520, s. Annex B) on cast films of 100 μm thickness produced on a monolayer cast film line with a melt temperature of 220°C and a chill roll temperature of 20°C. The extraction was performed at a temperature of 50°C and an extraction time of 30 min.

**Number average molecular weight ($M_n$), weight average molecular weight ($M_w$) and polydispersity (Mw/Mn)**

are determined by Gel Permeation Chromatography (GPC) according to the following method:

The weight average molecular weight Mw and the polydispersity (Mw/Mn), wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methylphenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**The polydispersity index, PI,**

PI = 105/Gc, is calculated from the cross-over point of G'(ω) and G"(ω), for which G'(ωc) = G"(ωc) = Gc holds. Dynamic rheological measurements for determining G'(ω) and G"(ω) were carried out at 200°C using 25 mm diameter plate/plate geometry. The oscillatory shear experiments were done within the linear viscoelastic range of strain at frequencies from 0.01 to 500 rad/s in line with ISO 6721-10.

**The glass transition temperature $T_g$ and the storage modulus G'** are determined by dynamic mechanical

analysis according to ISO 6721-7. The measurements are done in torsion mode on compression moulded samples (40x10x1 mm3) between -100 °C and +150 °C with a heating rate of 2 °C/min and a frequency of 1 Hz.

**Refractive Index (RI)** is determined at 23 °C according to the standard ISO 489:1999 (E) "Plastics-determination of refractive index" (Method B according to ISO 489:1999 (E), second edition 1999-04-15)

The immersion method was applied to pellets and powder by means of a microscope, making use of the Becke Line phenomenon (McCorne, Walter C.; McCorne, Lucy B.; Delly, John Gustav, "Polarized Light Microscopy", McCrone Research Institute, Chicago, Illinois, (1999); and C. Viney, "Transmitted Polarised Light Microscopy", McCrone Research Institute, Chicago, Illinois, (1990).)

Increment of the certificated immersion liquid 1-bromonaphthalene (CAS No. 90-11-9, supplied by Cargille Laboratories, Cedar Grove, New Jersey, USA) accounted for 0,002 units.

**Density** is determined according to ISO1183D and ISO1872-2 for sample preparation.

**Styrene content** is measured by Fourier transform infrared spectroscopy (FTIR). A thin film of 300 μm thickness is prepared from pelletized material by hot-pressing (190 °C, 100 bar, 1 minute). Per sample, two films are prepared. The so prepared film-samples are measured by a Perkin Elmer IR-Spectrophotometer System 2000FTIR. The peak at 1602 $cm^{-1}$ (Phenyl- Absorption) is integrated and evaluated by using an internally established calibration curve. The arithmetic mean of two measurements is given as result. Calibration: Various polypropylene-compounds consisting of PP and a styrene-containing elastomer (of known styrene-content) are prepared and measured according to the method described above.

**Tensile test:** The tensile test (modulus, strength and extension at break) is measured at 23 °C according to ISO 527-1 (cross head speed 1 mm/min) using injection moulded specimens according to ISO 527-2(1B), produced according to EN ISO 1873-2 (dog 10 bone shape, 4 mm thickness).

**Charpy impact test:** The Charpy notched impact strength (NIS) was measured according to ISO 179 1eA at +23 °C and -20 °C, using injection molded bar test specimens of 80x10x4 $mm^3$ prepared in accordance with ISO 294-1:1996.

**Transparency, haze and clarity** were determined according to ASTM D1003-00 on both 60x60x1 $mm^3$ plaques injection moulded in line with EN ISO 1873-2 using a melt temperature of 200°C, and cast films (thickness 50 μm) produced on a monolayer cast film line with a melt temperature of 220°C and a chill roll temperature of 20°C.

**Sealing initiation temperature (SIT):**

The method determines the sealing temperature range (sealing range) of polypropylene films, in particular blown films or cast films. The sealing temperature range is the temperature range, in which the films can be sealed according to conditions given below.

The lower limit (heat sealing initiation temperature (SIT)) is the sealing temperature at which a sealing strength of > 3 N is achieved.

The sealing range is determined on a J&B Universal Sealing Machine Type 3000 with a film of 100 μm thickness produced on a monolayer cast film line with a melt temperature of 220°C and a chill roll temperature of 20°C with the following further parameters:

| | |
|---|---|
| Specimen width: | 25.4 mm |
| Seal Pressure: | 0.1 N/mm2 |
| Seal Time: | 0.1 sec |
| Cool time: | 99 sec |
| Peel Speed: | 10 mm/sec |
| Start temperature: | 80 °C |
| End temperature: | 150 °C |
| Increments: | 10 °C |

The specimen is sealed A to A at each seal bar temperature and seal strength (force) is determined at each step. The temperature is determined at which the seal strength reaches 3 N.

**Tear resistance (determined as Elmendorf tear (N)):** Applies both for the measurement in machine direction (MD) and transverse direction (TD). The tear strength is measured using the ISO 6383/2 method. The force required to propagate tearing across a film sample is measured using a pendulum device. The pendulum swings under gravity through an arc, tearing the specimen from pre-cut slit. The film sample is fixed on one side by the pendulum and on the other side by a stationary clamp. The tear resistance is the force required to tear the specimen. The relative tear resistance (N/mm) is then calculated by dividing the tear resistance by the thickness of the film. Cast films with a thickness of 50

μm, produced on a monolayer cast film line with a melt temperature of 220°C and a chill roll temperature of 20°C, were used for this test.

**2. Material description**

**Propylene copolymer (A):**

The matrix propylene copolymer (A) used in the inventive examples IE1 to IE3, and comparative example CE1 is named **PP1,** which is a bimodal propylene-ethylene random copolymer. The basic properties are shown in Table 1. The catalyst used for the polymerization of **PP1** is described in example 10 of WO2010/052263 A1.

The matrix propylene copolymer (A) used in the comparative examples CE2 and CE3 is named **PP2,** which is a commercial product BorPure RB501BF from Borealis AG with an ethylene content of 6.2 mol%, an $MFR_2$ (230°C) of 1.9 g/10min and an XCS content of 9.0 wt%.

The comparative example CE4 is a random heterophasic polypropylene copolymer prepared in-situ in a sequential polymerization process wherein the elastomer component (EPR) with ethylene content of 25 wt% is already included in the matrix **(PP3).** The said heterophasic Polypropylene copolymer is a commercial product Borsoft SD233CF produced by Borealis AG with an $MFR_2$ (230°C) of 7g/10min, an XCS content of 31.1 wt% and a total ethylene content of 8 wt%.

**Elastomeric modifier (B):**

**Vistamaxx™ 6102** is a commercial propylene-ethylene elastomer available from ExxonMobil having an ethylene content of 16 wt%, density of 0.862 g/cm$^3$ and a $MFR_2$ (230 °C) of 3.0 g/10min.

**Queo™ 0201** is a commercial ethylene based octene plastomer available from Borealis AG, produced in a solution polymerisation process using a metallocene catalyst with $MFR_2$ (190°C) of 1.1 g/10min and density of 0.902 g/cm$^3$

**Kraton G1645** is a commercial styrene-ethylene/butene-Styrene(SEBS) block copolymer available from Kraton Polymers LLC, with PS content of 12% and $MFR_2$ (230 °C) of about 3.0 g/10min.

**3. Examples**

Different polymer compositions for the Inventive Examples (IE) and the comparative examples (CE) are produced by compounding the propylene copolymers (A) with the elastomeric modifiers (B) in a twin-screw extruder at temperatures of 200-240 °C.

The composition of the Inventive Examples (IE) and the comparative examples (CE) are shown in Table 2 and the mechanical and optical properties are shown in Table 3.

**Table 1** basic properties of **PP1**

| | | **PP1** |
|---|---|---|
| **Loop (R-PP1)** | | |
| Temperature | [°C] | 70 |
| $MFR_2$ (230 °C) | [g/10min] | 3.8 |
| C2 content | [mol-%] | 2.0 |
| amount | [wt.-%] | 50 |
| **1 GPR (R-PP2)** | | |
| Temperature | [°C] | 70 |
| $MFR_2$(230 °C) | [g/10min] | 7.2 |
| C2 content | [mol-%] | 9.2 |
| amount | [wt.-%] | 50 |
| **Final** | | |
| $MFR_2$(230 °C) | [g/10min] | 7 |
| C2 content | [mol-%] | 4.9 |

(continued)

| Final | | |
|---|---|---|
| XCS | [wt.-%] | 19.5 |
| Tm | [°C] | 132 |
| Hm | J/g | 82 |
| Mw | [kg/mol] | 197 |
| Mw/Mn | [-] | 3.1 |
| PI | [$Pa^{-1}$] | 2.6 |
| 2,1 | [%] | 0.50 |
| C6(FDA) | [wt%] | 2.5 |

**Table 2** Composition and basic properties of examples and comparative examples

| | | Matrix | | | | Modifier | | | | | Composition | | |
|---|---|---|---|---|---|---|---|---|---|---|---|---|---|
| | | C2 mol% | $T_g$ °C | $T_m$ °C | RI | | wt% | $T_g$°C | G' (23°C) MPa | RI | $MFR_2$ (230 °C) g/10min | XCS wt% | C6 wt% |
| **IE1** | PP1 | 4.9 | -4.0 | 132 | 1.500 | Vistamaxx 6102 | 30 | -35 | 12 | 1.502 | 6.7 | 39 | 7.7 |
| **IE2** | PP1 | 4.9 | -4.0 | 132 | 1.500 | Queo 0201 | 30 | -55 | 25 | 1.508 | 5.6 | 14 | 1.9 |
| **IE3** | PP1 | 4.9 | -4.0 | 132 | 1.500 | Kraton G1645 | 30 | -60 | 9 | 1.508 | 6.5 | 52 | 17.6 |
| **CE1** | PP1 | 4.9 | -4.0 | 132 | 1.500 | -- | 0 | | | | 7.9 | 19 | 2.5 |
| **CE2** | PP2 | 6.2 | -2.0 | 139 | 1.500 | -- | 0 | | | | 4.5 | 8.5 | 2.5 |
| **CE3** | PP2 | 6.2 | -2.0 | 139 | 1.500 | Kraton G1645 | 37 | -60 | 9 | 1.508 | 3.1 | 46 | 40 |
| **CE4** | PP3 | 5.9 | -6.1 | 141 | 1.500 | In reactor EPR (C2 25%) | 15 | -50 | 22 | 1.480 | 7.0 | 23 | 7.7 |

**Table 3** Thermal, mechanical and optical properties of examples and comparative examples

| Examples | IE1 | IE2 | IE3 | CE1 | CE2 | CE3 | CE4 |
|---|---|---|---|---|---|---|---|
| ΔRI* | 0.002 | 0.008 | 0.008 | -- | -- | 0.008 | 0.020 |
| G' (23 °C) (Mpa) | 169 | 232 | 111 | 327 | 354 | 87 | 325 |
| $T_g1$ (°C) | -4.3 | -3.7 | -4.7 | -4.0 | -2.0 | -2.0 | -6.1 |
| $T_g2$ (°C) | -24.6 | -36.1 | -27.9 | -- | -- | -60.0 | -50.0 |
| Injection moulded | | | | | | | |
| Tensile modulus (MPa) | 225 | 385 | 288 | 540 | 686 | 152 | 500 |
| NIS@23°C (kJ/$m^2$) | 85.2 | 80.3 | 78.0 | 9.7 | 8.5 | 46.2 | 12.2 |
| NIS@-20°C (kJ/$m^2$) | 1.4 | 1.9 | 1.8 | 0.9 | 1.2 | 1.7 | 1.7 |
| Clarity(1mm) (%) | 98 | 96 | 98 | 98 | 96 | 98 | 93 |
| Haze(1mm) (%) | 21 | 21 | 13 | 36 | 25 | 9.5 | 62 |
| Cast film (50 μm) | | | | | | | |
| Clarity (%) | 99.7 | n.d.** | 99.6 | 99.7 | n.d. | n.d. | n.d. |
| Haze (%) | 0.1 | n.d. | 0.2 | 0.4 | n.d. | n.d. | n.d. |
| Relative tear resistance MD (N/mm) | 181 | n.d. | 159 | 40 | n.d. | n.d. | n.d. |
| Relative tear resistance TD (N/mm) | 201 | n.d. | 140 | 244 | n.d. | n.d. | n.d. |
| SIT/°C | 99 | n.d. | 100 | 108 | n.d. | n.d. | n.d. |

*ΔRI is the absolute difference of the RI of the matrix and the RI of the modifier
**n.d. not determined

## Claims

1. Polymer composition comprising:

   a) 65-90 wt% of a propylene copolymer (A) having

   (1) a melt flow rate $MFR_2$ (230 °C) measured according to ISO1133 in the range of more than 0.8 to 15.0/10min,
   (2) a comonomer content in the range of 2.0 to below 12.0 mol%,
   (3) a melting temperature in the range of 125 to below 143 °C, and
   (4) a xylene cold soluble fraction (XCS) in the range of 17.0 to 45.0 wt%,
   (5) a glass transition temperature (Tg) in the range of from higher than -10 °C to 2°C,

   and
   b) 10-35 wt% of an elastomeric modifier (B), wherein the elastomeric modifier (B) is **characterized in that**,

   (i) the difference between the refractive index (RI) determined at 23 °C according to the standard ISO 489:1999 (E) of the propylene copolymer (A) and the elastomeric modifier (B) is less than 0.015, and
   (ii) the glass transition temperature ($T_g$) of the elastomeric modifier (B) is equal to or below -20 °C.

2. Polymer composition according to claim 1, wherein said elastomeric modifier (B) is an ethylene-propylene elastomer (B-1).

3. Polymer composition according to claim 2, wherein said ethylene-propylene elastomer (B-1) has a propylene content of 80 to 92 wt% based on the weight of ethylene-propylene elastomer (B-1)

4. Polymer composition according to claim 1, wherein said elastomeric modifier (B) is a ethylene-alpha olefin elastomer

(B-2).

5. Polymer composition according to claim 4, wherein said ethylene-alpha olefin elastomer (B-2) has a melt flow rate $MFR_2$ (190°C) in the range of 0,5 g/10min to 30 g/10min, and has a density of 0.860 - 0.915 g/$cm^3$.

6. Polymer composition according to claim 1, wherein said elastomeric modifier (B) is a styrenic elastomer (B-3).

7. Polymer composition according to claim 6, wherein the styrene content in each styrenic based elastomer (B-3) is equal or below 15 wt%.

8. Polymer composition according to claim 6 or 7, wherein said styrenic based elastomer (B-3) is styrene-ethylene/butylene-stylene (SEBS) block copolymer.

9. Polymer composition according to any one of the preceding claims, wherein said propylene copolymer (A) has

a) a molecular weight distribution (Mw/Mn) determined by GPC of at least 2.7; and /or
b) a polydispersity index (PI) as calculated from shear rheology of at least 2.3.

10. Polymer composition according to any one of the preceding claims, wherein said propylene copolymer (A)

a) has 2,1 regio-defects of at least 0.2% determined by $^{13}C$-NMR spectroscopy; and /or
b) is monophasic.

11. Polymer composition according to any one of the preceding claims, wherein the comonomer in said propylene copolymer (A) is selected from ethylene, C4 to C12 alpha olefin, and mixtures thereof, preferably the comonomer is ethylene.

12. Polymer composition according to any one of the preceding claims, wherein said elastomeric modifier (B) has a storage modulus (G') determined by dynamic mechanical analysis (DMA) of not more than 50 Mpa.

13. Polymer composition according to any one of the preceding claims, wherein said polymer composition has at least two glass transition points ($T_g$), wherein one of the two glass transition points ($T_g1$) is at temperature range of -10 to +2 °C, and another glass transition points ($T_g2$) is at temperature range of -55 to - 18 °C.

14. Polymer composition according to any one of the preceding claims, wherein said polymer composition has has a storage modulus (G') determined by dynamic mechanical analysis (DMA) of not more than 300 MPa.

15. Polymer composition according to any one of the preceding claims, wherein said polymer composition has an impact strength at +23 °C of at least 48 kJ/$m^2$ and at -20 °C of at least 0.9 kJ/$m^2$, in a Charpy notched test according to ISO 179 1eA.

16. Polymer composition according to any one of the preceding claims, wherein said polymer composition has a haze of lower than 25% measured according to ASTM D 1003 on an injection moulded plague (1mm) comprising the said polymer composition.

17. An article comprising a polymer composition according to any of the preceding claims, wherein preferably the article is a packaging material, like a container.

18. Use of the polymer composition according to claims 1 to 15 for the preparation of film article, thermoformed article, or injection moulded article.

**Patentansprüche**

1. Polymer-Zusammensetzung, umfassend:

a) 65-90 Gew.-% eines Propylen-Copolymers (A) mit

(1) einer Schmelze-Fließ-Rate $MFR_2$ (230°C), gemessen gemäß ISO 1133, im Bereich von mehr als 0,8 bis 15,0/10 min,
(2) einem Comonomer-Gehalt im Bereich von 2,0 bis unter 12,0 Mol-%,
(3) einer Schmelz-Temperatur im Bereich von 125 bis unter 143°C und
(4) einer in kaltem Xylol löslichen Fraktion (XCS) im Bereich von 17,0 bis 45,0 Gew.-%,
(5) einer Glas-Übergangs-Temperatur ($T_g$) im Bereich von mehr als -10°C bis 2°C,

und
b) 10-35 Gew.-% eines elastomeren Modifizierungsmittels (B), wobei das elastomere Modifizierungsmittel (B) **dadurch gekennzeichnet ist, dass**

(i) die Differenz zwischen dem Brechungsindex (RI), der bei 23°C gemäß dem Standard ISO 489:1999 (E) von dem Propylen-Copolymer (A) und dem elastomeren Modifizierungsmittel (B) bestimmt wird, kleiner als 0,015 ist, und
(ii) die Glas-Übergangs-Temperatur ($T_g$) des elastomeren Modifizierungsmittels (B) gleich oder kleiner als -20°C ist.

**2.** Polymer-Zusammensetzung nach Anspruch 1, wobei das elastomere Modifizierungsmittel (B) ein Ethylen-Propylen-Elastomer (B-1) ist.

**3.** Polymer-Zusammensetzung nach Anspruch 2, wobei das Ethylen-Propylen-Elastomer (B-1) einen Propylen-Gehalt von 80 bis 92 Gew.-%, bezogen auf das Gewicht des Ethylen-Propylen-Elastomers (B-1), aufweist.

**4.** Polymer-Zusammensetzung nach Anspruch 1, wobei das elastomere Modifizierungsmittel (B) ein Ethylen-Alpha-Olefin-Elastomer (B-2) ist.

**5.** Polymer-Zusammensetzung nach Anspruch 4, wobei das Ethylen-Alpha-Olefin-Elastomer (B-2) eine Schmelze-Fließ-Rate $MFR_2$ (190°C) im Bereich von 0,5 g/10 min bis 30 g/10 min aufweist und eine Dichte von 0,860 - 0,915 $g/cm^3$ aufweist.

**6.** Polymer-Zusammensetzung nach Anspruch 1, wobei das elastomere Modifizierungsmittel (B) ein Styrol-Elastomer (B-3) ist.

**7.** Polymer-Zusammensetzung nach Anspruch 6, wobei der Styrol-Gehalt in jedem Elastomer (B-3) auf Styrolbasis gleich oder unter 15 Gew.-% ist.

**8.** Polymer-Zusammensetzung nach Anspruch 6 oder 7, wobei das Elastomer (B-3) auf Styrolbasis Styrol-Ethylen / Butylen-Styrol (SEBS)-Blockcopolymer ist.

**9.** Polymer-Zusammensetzung nach einem der vorangehenden Ansprüche, wobei das Propylen-Copolymer (A) aufweist

a) eine durch GPC bestimmte MolekulargewichtsVerteilung (Mw/Mn) von mindestens 2,7;
und/oder
b) einen Polydispersitätsindex (PI), berechnet aus einer Scher-Rheologie, von mindestens 2,3.

**10.** Polymer-Zusammensetzung nach einem der vorangehenden Ansprüche, wobei das Propylen-Copolymer (A)

a) 2,1-Regio-Defekte von mindestens 0,2 % aufweist, bestimmt durch $^{13}C$-NMR-Spektroskopie; und/oder
b) einphasig ist.

**11.** Polymer-Zusammensetzung nach einem der vorangehenden Ansprüche, wobei das Comonomer in dem Propylen-Copolymer (A) ausgewählt ist aus Ethylen, C4 bis C12 Alpha-Olefin und Gemischen davon, vorzugsweise ist das Comonomer Ethylen.

**12.** Polymer-Zusammensetzung nach einem der vorangehenden Ansprüche, wobei das elastomere Modifizierungsmittel (B) einen Speichermodul (G') aufweist, der durch dynamische mechanische Analyse (DMA) bestimmt wird, von nicht mehr als 50 MPa.

**13.** Polymer-Zusammensetzung nach einem der vorangehenden Ansprüche, wobei die Polymer-Zusammensetzung mindestens zwei Glasübergangs-Punkte ($T_g$) aufweist, wobei einer der beiden Glasübergangs-Punkte ($T_g$1) im Temperaturbereich von -10 bis +2°C liegt und ein weiterer GlasübergangsPunkt ($T_g$2) im Temperaturbereich von -55 bis -18°C liegt.

**14.** Polymer-Zusammensetzung nach einem der vorangehenden Ansprüche, wobei die Polymer-Zusammensetzung einen Speichermodul (G'), der durch dynamische mechanische Analyse (DMA) bestimmt wird, von nicht mehr als 300 MPa aufweist.

**15.** Polymer-Zusammensetzung nach einem der vorangehenden Ansprüche, wobei die Polymer-Zusammensetzung eine Schlagzähigkeit bei +23°C von mindestens 48 $kJ/m^2$ und bei -20°C von mindestens 0,9 $kJ/m^2$ in einem Kerbschlagtest nach Charpy gemäß ISO 179 1eA aufweist.

**16.** Polymer-Zusammensetzung nach einem der vorangehenden Ansprüche, wobei die Polymer-Zusammensetzung einen Haze-Wert von weniger als 25 % aufweist, gemessen gemäß ASTM D 1003 an einem spritzgegossenen Plättchen (1 mm), das die Polymer-Zusammensetzung umfasst.

**17.** Gegenstand, umfassend eine Polymer-Zusammensetzung nach einem der vorangehenden Ansprüche, wobei der Gegenstand vorzugsweise ein Verpackungsmaterial, wie ein Behälter, ist.

**18.** Verwendung der Polymer-Zusammensetzung nach den Ansprüchen 1 bis 15 zur Herstellung von einem Foliengegenstand, thermogeformten Gegenstand oder Spritzguss-Gegenstand.

## Revendications

**1.** Composition de polymère comprenant

a) 65 à 90 % en poids d'un copolymère de propylène (A)

(1) présentant un indice de fluage $MFR_2$ (230°C), mesuré conformément à la norme ISO 1133, situé dans la plage allant de plus de 0,8 à 15,0/10 min,
(2) possédant une teneur en comonomères située dans la plage allant de 2,0 à moins de 12,0 % en moles,
(3) présentant un point de fusion situé dans la plage allant de 125 à moins de 143°C, et
(4) possédant une fraction soluble dans le xylène froid (XCS) située dans la plage allant de 17,0 à 45,0 % en poids,
(5) présentant une température de transition vitreuse (Tg) située dans la plage allant de plus de -10°C à 2°C,

et
b) 10 à 35 % en poids d'un modifiant élastomère (B), lequel modifiant élastomère (B) est **caractérisé en ce que**

(i) la différence entre l'indice de réfraction (RI), déterminé à 23°C conformément à la norme ISO 489:1999 (E), du copolymère de propylène (A) et celui du modifiant élastomère (B), est inférieure à 0,015, et
(ii) la température de transition vitreuse ($T_g$) du modifiant élastomère (B) est égale ou inférieure à -20°C.

**2.** Composition de polymère selon la revendication 1, dans laquelle ledit modifiant élastomère (B) est un élastomère d'éthylène-propylène (B-1).

**3.** Composition de polymère selon la revendication 2, dans laquelle ledit élastomère d'éthylène-propylène (B-1) possède une teneur en propylène de 80 à 92 % en poids, par rapport au poids de l'élastomère d'éthylène-propylène (B-1).

**4.** Composition de polymère selon la revendication 1, dans laquelle ledit modifiant élastomère (B) est un élastomère d'éthylène-alpha-oléfine (B-2).

**5.** Composition de polymère selon la revendication 4, dans laquelle ledit élastomère d'éthylène-alpha-oléfine (B-2) présente un indice de fluage $MFR_2$ (190°C) situé dans la plage allant de 0,5 g/10 min à 30 g/10 min, et présente une masse volumique de 0,860 à 0,915 $g/cm^3$.

**6.** Composition de polymère selon la revendication 1, dans laquelle ledit modifiant élastomère (B) est un élastomère styrénique (B-3).

**7.** Composition de polymère selon la revendication 6, dans laquelle la teneur en styrène de chaque élastomère styrénique (B-3) est égale ou inférieure à 15 % en poids.

**8.** Composition de polymère selon la revendication 6 ou 7, dans laquelle ledit élastomère styrénique (B-3) est un copolymère séquencé de styrène-éthylène/butylène-styrène (SEBS).

**9.** Composition de polymère selon l'une quelconque des revendications précédentes, dans laquelle ledit copolymère de propylène (A) présente

a) une distribution des masses moléculaires (Mw/Mn), déterminée par GPC, d'au moins 2,7 ; et/ou
b) un indice de polydispersité (PI), tel que calculé à partir de la rhéologie de cisaillement, d'au moins 2,3.

**10.** Composition de polymère selon l'une quelconque des revendications précédentes, dans laquelle ledit copolymère de propylène (A)

a) possède au moins 0,2 % de régio-défauts 2,1, déterminés par spectroscopie RMN-$^{13}C$ ; et/ou
b) est monophasique.

**11.** Composition de polymère selon l'une quelconque des revendications précédentes, dans laquelle le comonomère dans ledit copolymère de propylène (A) est choisi parmi l'éthylène, une alpha-oléfine en C4 à C12, et leurs mélanges, de préférence le comonomère est l'éthylène.

**12.** Composition de polymère selon l'une quelconque des revendications précédentes, dans laquelle ledit modifiant élastomère (B) présente un module de stockage (G'), déterminé par analyse mécanique dynamique (DMA), non supérieur à 50 MPa.

**13.** Composition de polymère selon l'une quelconque des revendications précédentes, laquelle composition de polymère présente au moins deux températures de transition vitreuse ($T_g$), dans laquelle l'une des deux températures de transition vitreuse ($T_g1$) est située dans la plage de température allant de -10 à +2°C, et l'autre température de transition vitreuse ($T_g2$) est située dans la plage allant de -55 à -18°C.

**14.** Composition de polymère selon l'une quelconque des revendications précédentes, laquelle composition de polymère présente un module de stockage (G'), déterminé par analyse mécanique dynamique (DMA), non supérieur à 300 MPa.

**15.** Composition de polymère selon l'une quelconque des revendications précédentes, laquelle composition de polymère présente une résistance au choc à +23°C d'au moins 48 kJ/$m^2$ et à -20°C d'au moins 0,9 kJ/$m^2$, dans un test sur barreau entaillé Charpy conformément à la norme ISO 179 1eA.

**16.** Composition de polymère selon l'une quelconque des revendications précédentes, laquelle composition de polymère présente un voile inférieur à 25 %, mesuré conformément à la norme ASTM D 1003 sur une plaque moulée par injection (1 mm) comprenant ladite composition de polymère.

**17.** Article comprenant une composition de polymère selon l'une quelconque des revendications précédentes, lequel article est de préférence un matériau d'emballage, tel qu'un récipient.

**18.** Utilisation de la composition de polymère selon les revendications 1 à 15 pour la préparation d'un article en film, d'un article thermoformé, ou d'un article moulé par injection.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0765654 A1
- WO 2010015539 A1
- EP 1352016 A
- EP 1889873 A
- EP 0887379 A
- WO 9212182 A
- WO 2004000899 A
- WO 2004111095 A
- WO 9924478 A
- WO 9924479 A
- WO 0068315 A
- WO 03051934 A
- WO 2006069733 A
- WO 0148034 A
- US 3300459 A
- US 5919877 A
- EP 0060090 A1
- WO 2010052263 A1


### Non-patent literature cited in the description


- *Chemical Reviews,* 2000, vol. 100 (4), 1316-1327
- **GALLI ; VECELLO.** *Prog.Polym.Sci.,* 2001, vol. 26, 1287-1336
- **RESCONI et al.** *Chemical Reviews,* 2000, vol. 100 (4), 1263
- **ENICHEM.** *DUTRAL, Ethylene-Propylene Elastomers,* 1991, 1-4
- Plastic Additives Handbook. Hans Zweifel, 2001
- **G. SINGH ; A. KOTHARI ; V. GUPTA.** *Polymer Testing,* 2009, vol. 28 (5), 475
- **Z. ZHOU ; R. KUEMMERLE ; X. QIU ; D. REDWINE ; R. CONG ; A. TAHA ; D. BAUGH ; B. WINNIFORD.** *J. Mag. Reson.,* 2007, vol. 187, 225
- **V. BUSICO ; P. CARBONNIERE ; R. CIPULLO ; C. PELLECCHIA ; J. SEVERN ; G. TALARICO.** *Macromol. Rapid Commun.,* 2007, vol. 28, 1128
- **L. RESCONI ; L. CAVALLO ; A. FAIT ; F. PIEMONTESI.** *Chem. Rev.,* 2000, vol. 100 (4), 1253
- **CHENG, H. N.** *Macromolecules,* 1950, vol. 17
- **W-J. WANG ; S. ZHU.** *Macromolecules,* 2000, vol. 33, 1157
- **CHENG, H. N.** *Macromolecules,* 1950, vol. 17
- **MCCORNE ; WALTER C. ; MCCORNE ; LUCY B. ; DELLY ; JOHN GUSTAV.** Polarized Light Microscopy. McCrone Research Institute, 1999
- **C. VINEY.** Transmitted Polarised Light Microscopy. McCrone Research Institute, 1990
- *CHEMICAL ABSTRACTS,* 90-11-9